# EUROPÄISCHE PATENTSCHRIFT

(11) **EP 0 371 558 B1**
(45) Veröffentlichungstag und Bekanntmachung des Hinweises auf die Patenterteilung: **08.02.1995**
(21) Anmeldenummer: 89202996.8
(22) Anmeldetag: 27.11.1989
(51) Int. Cl.: H04M 1/31

(54) **Schaltungsanordung für Übertragungseinrichtungen**
Circuit arrangement for transmission devices
Circuit pour équipements de transmission

(30) Priorität: 01.12.1988 DE 3840434
(43) Veröffentlichungstag der Anmeldung: 06.06.1990
(73) Patentinhaber: Philips Patentverwaltung GmbH, 22335 Hamburg (DE); Philips Electronics N.V., 5621 BA Eindhoven (NL)
(72) Erfinder: Reichelt, Ingo, Dipl.-Ing., D-8540 Schwabach (DE)
(74) Vertreter: Peuckert, Hermann, Dipl.-Ing.

(56) Entgegenhaltungen:
- WO-A-86/07659
- DE-A- 3 248 355
- DE-C- 3 541 548

## Beschreibung

Die Erfindung betrifft eine Schaltungsanordnung für Übertragungseinrichtungen mit einer Steuereinrichtung zur Abgabe von Wählimpulsen.

Aus DE-OS 32 48 355 ist eine Schaltungsanordnung zur Abgabe von Wählimpulsen über eine mit einer Stromquelle verbundene Leitung in einer Fernmelde-, insbesondere Fernsprechanlage bekannt, bei der ein Wählimpulsgeber vorgesehen ist, der über eine Steuereinrichtung ein in die Leitung eingefügtes Schaltglied steuert. Das Schaltglied bewirkt dabei mit jedem von dem Wählimpulsgeber abgegebenen Impuls eine Veränderung des über die Leitung fließenden Stromes. Die Steuereinrichtung ist als Optokoppler ausgeführt, während das in Serie zur Leitung liegende Schaltglied ein Feldeffekttransistor ist. Mit Hilfe einer Speiseschaltung wird zwischen a- und b-Ader der Übertragungsleitung eine Schleife gebildet. Die Speiseschaltung leitet außerdem aus dem durch sie fließenden Schleifenstrom eine Versorgungsspannung ab, die den übrigen Schaltungsteilen der Fernmeldeanlage zugeführt wird.

Der Erfindung liegt die Aufgabe zugrunde, eine Schaltung der eingangs genannten Art so auszugestalten, daß sie möglichst einfach aufgebaut ist und während der Übertragung eine möglichst geringe Einfügungsdämpfung aufweist und insbesondere die Impedanz der Übertragungseinrichtung möglichst nicht verringert. Bei Schleifenschluß soll die Wechselstromimpedanz der Schaltung deshalb ausreichend hochohmig sein. Für Gleichstrom soll sie einen möglichst geringen Widerstand aufweisen.

Diese Aufgabe wird gemäß der Erfindung dadurch gelöst, daß parallel zur Übertragungseinrichtung an den Adern einer Anschlußleitung eine als Serienschaltung aus einem Bipolartransistor und aus einem Schaltelement mit einem MOS-Feldeffekttransistor gebildete Schaltvorrichtung angeordnet ist. Von einer Konstantstromquelle wird kein Gebrauch gemacht. Dies hat den Vorteil, daß Schwierigkeiten vermieden werden können, die ausgelöst werden, wenn Vermittlungen, wie dies häufig der Fall ist, mit Konstantstrom speisen. Beim Gegeneinanderschalten von zwei Konstantstromquellen tritt nämlich sonst der Fall ein, daß eine der beiden Konstantstromquellen in die Sättigung gerät.

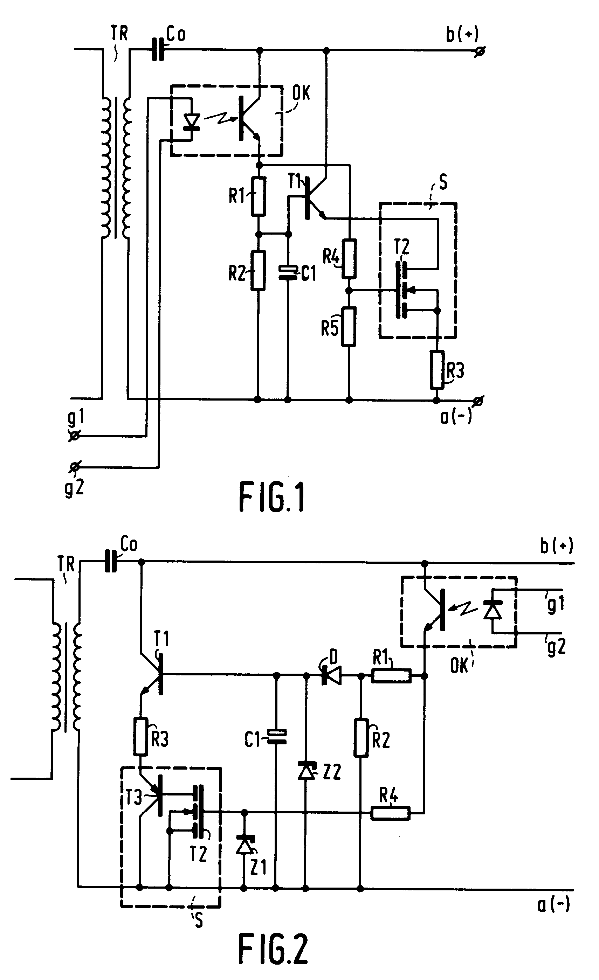

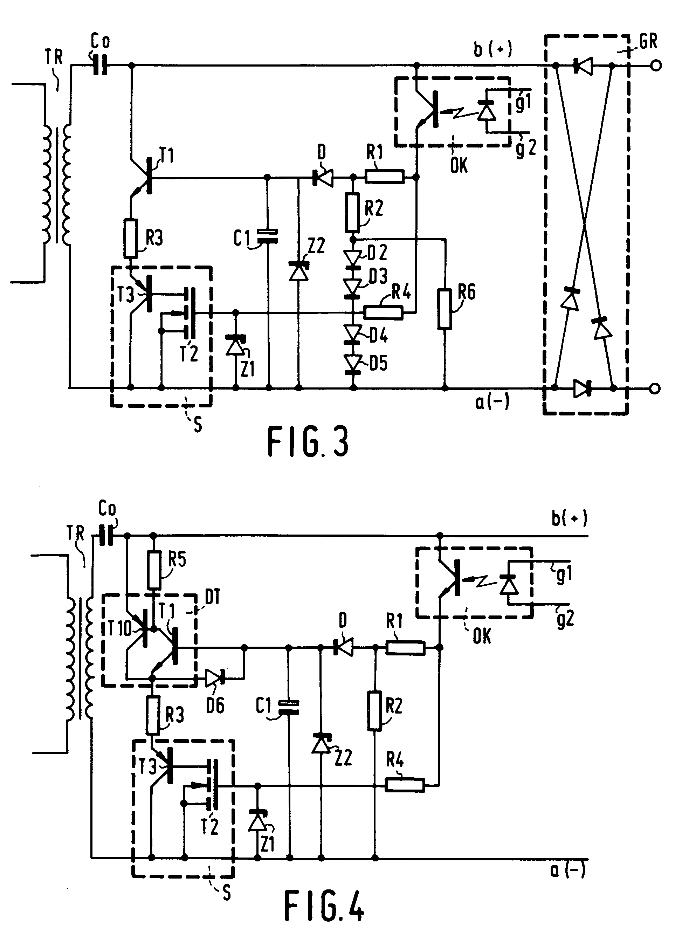

Im folgenden soll anhand der in den Figuren 1 und 4 dargestellten Ausführungsbeispiele die Erfindung beschrieben werden.

Es zeigen:

Fig. 1 eine Anordnung mit einem MOS-Feldeffekttransistor als Schaltelement.

Fig. 2 eine Anordnung mit einer Kombination aus einem Bipolartransistor und einem MOS-Feldeffekttransistor als Schaltelement.

Fig. 3 eine andere Anordnung mit einer Kombination aus einem Bipolartransistor und einem MOS-Feldeffekttransistor als Schaltelement.

Fig. 4 eine Anordnung mit einer Darlington-Stufe.

Die in der Figur 1 schematisch dargestellte Schaltungsanordnung ist über die Adern a, b der Anschlußleitung mit einer Fernmeldeanlage, z.B. mit einer Vermittlungseinrichtung, verbunden. Dabei kann als Verpolschutz zwischen der Schaltungsanordnung und der über die Adern a, b der Anschlußleitung angeschlossenen Fernmeldeanlage eine Brückengleichrichteranordnung eingefügt sein. An die beiden Adern ist über einen Kondensator C0 ein Transformator Tr angeschlossen, an dem primärseitig eine Übertragungseinrichtung angeordnet ist. Auf den Aufbau der Übertragungseinrichtung wird jedoch im folgenden nicht näher eingegangen, da diese nicht Gegenstand der vorliegenden Erfindung ist. Es kann sich dabei z.B. um ein Modem für Datenübertragung handeln. An den Leitungen g1 und g2 ist ein Wählimpuls- und Schleifensignalgeber angeschlossen, der über eine Steuereinrichtung OK die Anordnung steuert. Die Steuereinrichtung OK ist bevorzugt ein aus einer Leuchtdiode und einem Fototransistor bestehender Optokoppler. Der Fototransistor des Optokopplers ist mit seinem Kollektor an der b-Ader und mit seinem Emitter über die Serienschaltung aus zwei Widerständen R1 und R2 an der a-Ader angeschlossen. Am Verbindungspunkt der beiden Widerstände R1 und R2 liegt die Basis eines npn-Bipolartransistors T1. Zwischen dieser Basis und der a-Ader ist außerdem ein Kondensator C1 geschaltet. Der Kollektor des Bipolartransistors T1 ist an der b-Ader angeschlossen. Parallel zu dem Spannungsteiler aus den beiden Widerständen R1 und R2 ist ein weiterer Spannungsteiler aus zwei Widerständen R4 und R5 angeordnet, wobei am Verbindungspunkt der beiden Widerstände R4 und R5 die Gate-Elektrode eines MOS-Feldeffekttransistors T2 angeschlossen ist. Der Drain-Anschluß des MOS-Feldeffekttransistors T2 ist mit dem Emitter des Bipolartransistors T1 und der Source-Anschluß über den Widerstand R3 mit der a-Ader verbunden. Das Schaltelement S ist bei diesem Ausführungsbeispiel nur durch den MOS-Feldeffekttransistor T2 gebildet.

Sobald über ein vom Wählimpuls- und Schleifensignalgeber erzeugtes und über die Leitungen g1 und g2 zugeführtes Signal mittels der Leuchtdiode der Fototransistor im Optokoppler OK leitend gesteuert ist, liegt das Potential der b-Ader, das gleich dem Potential am Kollektor des Transistors T1 ist, unmittelbar an den beiden Spannungsteilern aus den Widerständen R1 und R2 sowie R4 und R5. Über den Widerstand R4 ist der Gate-Anschluß des MOS-Feldeffekttransistors mit dem Potential der b-Ader verbunden, so daß dieser gleichstrommäßig durchschaltet. Er weist einen sehr niederohmigen Gleichstromwiderstand auf, was in erster Linie bauelementbedingt ist. Gleichzeitig wird auch der Transistor T1 über den Widerstand R1 leitend geschaltet, sobald der Kondensator C1 aufgeladen ist. Die Basis des Transistors T1 liegt über dem Kondensator C1 wechselstrommäßig am Potential der a-Ader, hierdurch ist der Transistor T1 wechselstrommäßig in Basisschaltung betrieben. Über den Widerstand R3 und den sehr niederohmigen Durchlaßwiderstand des MOS-Feldeffekttransistors erfolgt zusätzlich eine Gleichstromarbeitspunktstabilisierung. Der gleichstrommäßige Arbeitspunkt der Schaltung wird durch das Verhältnis der Widerstände R1, R2, R3 und den Durchlaßwiderstand des MOS-Feldeffekttransistors bestimmt. Der Widerstand R3 zwischen dem Source-Anschluß des MOS-Feldeffekttransistors T2 und der a-Ader bewirkt eine Erhöhung des dynamischen Widerstandes, indem er die Rückwirkung der Gate-Spannung auf den Emitter-Strom des Bipolartransistors T1 verringert.

Wird die Steuereinrichtung OK durch vom Wählimpuls- und Schleifensignalgeber abgegebene Impulse derart gesteuert, daß der Fototransistor abwechselnd leitend und gesperrt ist, so werden, wie zuvor beschrieben, der Transistor T1 und der MOS-Feldeffekttransistor T2 leitend. Das Potential an der Basis des Transistors T1 wird durch den Kondensator C1 abhängig von der durch R2 und C1 gebildeten Zeitkonstanten gehalten, so daß der Transistor T1 während der Impulsserie leitend gesteuert bleibt, und beim folgenden Leitendwerden des Fototransistors sofort Strom fließt, ohne daß der Kondensator C1 erneut voll zu laden ist. Wird der Fototransistor im Optokoppler OK gesperrt, so schaltet der MOS-Feldeffekttransistor T2 ebenfalls sofort in den Sperrzustand. Hierdurch wird bewirkt, daß die Impulse verzerrungsfrei übertragen werden.

Der an die a-Ader geschaltete Widerstand R5 der Spannungsteilerschaltung an der Gate-Elektrode des MOS-Feldeffekttransistors T2 ist möglichst niederohmig auszuführen, damit eine zurückgeführte Wechselspannung auf die Gate-Elektrode möglichst ohne störende Wirkung bleibt. Der weitere Widerstand R4 dieses Spannungsteilers ist deshalb möglichst hochohmig zu machen.

Bei einem ankommenden Anruf wird nach dem Schließen der Schleife in der Übertragungseinrichtung z.B. beim Abheben des Handapparates, über die Leitungen g1 und g2 ein Dauersignal an den Optokoppler OK angelegt, worauf der Bipolartransistor T1 und der Feldeffekttransistor T2 leitend gesteuert werden und die Funktion einer Schleifenhalteschaltung übernehmen.

In einer bevorzugten Ausgestaltung ist der Widerstand R5 mit Vorteil eine Z-Diode, deren Anode an der a-Ader angeschlossen ist. Diese Ausgestaltung hat den Vorteil, daß sie auch als Schutzeinrichtung für den MOS-Feldeffekttransistor T2 wirkt, wodurch erreicht wird, daß die zulässige Gate-Spannung dieses Transistors nicht überschritten wird.

Diese Ausgestaltung ist in dem in Fig. 2 gezeigten Ausführungsbeispiel dargestellt. Dieses Ausführungsbeispiel entspricht im wesentlichen der in Fig. 1 gezeigten Ausgestaltung mit dem Unterschied, daß das Schaltelement S aus der Kombination aus einem MOS-Feldeffekttransistor T2 und einem weiteren Bipolartransistor T3 gebildet ist. In den beiden Figuren sind gleiche Teile gleich bezeichnet, auf die Funktion bereits beschriebener Schaltungsteile wird zu Vermeidung von unnötigen Wiederholungen im nachfolgenden nicht mehr eingegangen.

In Serie zur Kollektor-Emitter-Strecke des Bipolartransistors T1 liegt die Emitter-Kollektor-Strecke eines weiteren Bipolartransistors T3, wobei dessen Kollektor mit der a-Ader verbunden ist. Parallel zur Basis-Kollektor-Strecke des weiteren Bipolartransistors T3 ist die Drain-Source-Strecke des MOS-Feldeffekttransistors T2 angeordnet. Wird durch ein entsprechendes Signal vom Optokoppler OK der MOS-Feldeffekttransistor durchgeschaltet, so wird gleichzeitig auch der weitere Bipolartransistor T3 leitend geschaltet. Durch die Anordnung wird vorteilhaft auf einfache und unaufwendige Weise eine wechselstrom-mäßige Rückwirkung über den MOS-Feldeffekttransistor T2 und den Widerstand R4 auf den Bipolartransistor T1 verhindert.

Bei dem Ausführungsbeispiel von Fig. 2 ist die Anordnung des Serienwiderstandes R3 zwischen der Kollektor-Emitter-Strecke des Bipolartransistors T1 und der Emitter-Kollektor-Strecke des weiteren Bipolartransistors T3 dargestellt. Dieser Widerstand R3 beeinflußt auch bei dieser Ausführungsform die Arbeitspunkteinstellung und die Stabilisierung des Bipolartransistors T1.

In dem in Fig. 2 dargestellten Ausführungsbeispiel ist ferner parallel zu dem an der Basis des Bipolartransistors T1 angeordneten Kondensator C1 eine weitere Z-Diode Z2 eingeschaltet. Mit dieser weiteren Z-Diode wird in vorteilhafter Weise eine Strombegrenzung durch die gesamte durch den Bipolartransistor T1 und dem diesen in Serie geschalteten Schaltelement S2 gebildete Schaltvorrichtung erreicht, da die Spannung an der Basis des Bipolartransistors T1 auf dem durch die Bemessung dieser Z-Diode Z2 bestimmten Wert festgehalten wird und somit nicht über den hierdurch vorgegebenen zulässigen Wert ansteigen kann.

Als weitere vorteilhafte Ausgestaltung der Erfindung ist beim Ausführungsbeispiel von Fig. 2 zwischen der Basis des Bipolartransistors T1 und dem Anzapfungspunkt des Spannungsteilers aus den beiden Widerständen R1 und R2 eine Diode D eingeschaltet, welche bei Impulsbetrieb eine Entladung des Kondensators C1 über den Widerstand R2 verhindert.

Das in Fig. 3 dargestellte Ausführungsbeispiel stimmt im wesentlichen mit dem in Fig. 2 gezeigten Ausführungsbeispiel überein, auf die hierzu gegebenen Erklärungen wird daher Bezug genommen. Es ist in Fig. 3 gezeigt, daß zwischen der Schaltungsanordnung an der durch a- und b-Ader gebildeten Übertragungsleitung und der daran angeschlossenen Fernmeldeanlage ein Brückengleichrichter GR eingefügt ist, wodurch die Anordnung verpolsicher ist. Zwischen dem Widerstand R2 des in Serie zum Ausgangskreis des Optokopplers OK angeordneten Spannungsteilers und der a-Ader ist in Serie eine Anzahl von Dioden D2 bis D5 eingefügt, außerdem ist parallel zu dieser Anordnung aus den Dioden D2 und D5 ein Widerstand R6 geschaltet. Die Schaltungsanordnung weist infolge der Temperaturabhängigkeit des durch die Halbleiterstrecken der Transistoren und der Gleichrichter im Brückengleichrichter fließenden Stromes einen Gleichstromwiderstand auf, der mit steigender Temperatur abnimmt. Diese Abhängigkeit wird durch die in Fig. 3 gezeigte Anordnung kompensiert, indem in Serie zu dem Spannungsteiler aus den Widerständen R1 und R2 nichtlineare Schaltelemente eingefügt sind, die im Ausführungsbeispiel durch die Dioden gebildet werden. Auf diese Weise wird der Gleichstromwiderstand der Anordnung auch bei Änderung der Temperatur konstant gehalten. Außerdem wird hierdurch bewirkt, daß unabhängig von dem in die Klemmen fließenden Strom der Gleichstromwiderstand der Anordnung konstant bleibt. Mit Hilfe des parallel zu der Serienschaltung aus den Dioden D2 bis D5 geschalteten Widerstandes R6 ist die kompensierende Wirkung der Diodenstrecken beeinflußbar.

Das in Fig. 4 gezeigte Ausführungsbeispiel stimmt im wesentlichen ebenfalls mit dem in Fig. 2 gezeigten Ausführungsbeispiel überein, so daß daher auf die hierzu gegebenen Erklärungen Bezug genommen wird. Es unterscheidet sich von dem Ausführungsbeispiel aus Fig. 2 dadurch, daß der Bipolartransistor T1 durch einen weiteren Bipolartransistor T10 zu einer Darington-Stufe DT ergänzt ist. Durch die mit dieser Anordnung gegenüber einem Einzeltransistor erzielbare höhere Stromverstärkung wird bewirkt, daß eine geringere Belastung des Steuerkreises erfolgt, so daß die Anordnung rückwirkungsfreier wird. Wegen der hohen Stromverstärkung dieser Anordnung läßt sich bei gleichem Strom durch den Widerstand R3 der Widerstand R1 des Spannungsteilers hochohmiger ausführen, was einer Erhöhung der Wechselstromimpedanz gleichkommt.

Infolge des unterschiedlichen Schaltverhaltens der Transistoren einer Darlington-Stufe kann es beim Abschalten des Stromes durch die Anordnung, z.B. durch Öffnen der Schleife, zur Zerstörung des ersten Bipolartransistors T1 kommen, wenn der weitere Bipolartransistor T10 nach dem Abschalten des Stromes noch kurzzeitig leitend ist. Eine Ursache hierfür können z.B. gespeicherte Ladungen in den beiden Bipolartransistoren sein. Durch den dann aus dem Kollektor des weiteren Bipolartransistors T10 fließenden Strom wird die Emitter-Basis-Strecke des ersten Bipolartransistors T1 in Sperrichtung beansprucht. Eine Verbesserung wird durch die zusätzliche Diode D6 erzielt, da diese den Strom aus dem Kollektor des weiteren Bipolartransistors T10 übernimmt. Mit dem zwischen der b-Ader und der Basis des weiteren Bipolartransistors T10 der Darlington-Stufe DT angeordneten Widerstand R5 wird der Einfluß des durch den Bipolartransistor T1 fließenden Reststromes auf die Darlington-Transistor T10 vermindert.

## Patentansprüche

1. Schaltungsanordnung für Übertragungseinrichtungen mit einer Steuereinrichtung zur Abgabe von Wählimpulsen,
dadurch gekennzeichnet,
daß parallel zur Übertragungseinrichtung an den Adern (a, b) einer Anschlußleitung eine als Serienschaltung aus einem Bipolartransistor (T1) und aus einem Schaltelement (S) mit einem MOS-Feldeffekttransistor (T2) gebildete Schaltvorrichtung angeordnet ist.

2. Schaltungsanordnung nach Anspruch 1,
dadurch gekennzeichnet,
daß der Bipolartransistor (T1) wechselstrommäßig in Basisschaltung betrieben ist, wobei zwischen seiner Basis und einer Ader (a) ein Kondensator (C1) liegt.

3. Schaltungsanordnung nach einem der Ansprüche 1 oder 2,
dadurch gekennzeichnet,
daß in Serie zur Emitter-Kollektor-Strecke des Bipolartransistors (T1) die Drain-Source-Strecke des als MOS-Feldeffekttransistor (T2) ausgebildeten Schaltelementes (S) geschaltet ist.

4. Schaltungsanordnung nach einem der Ansprüche 1 oder 2,
dadurch gekennzeichnet,
daß das in Serie zur Emitter-Kollektor-Strecke des Bipolartransistors (T1) liegende Schaltelement (S) durch die Emitter-Kollektor-Strecke eines weiteren Bipolartransistors (T3) und einen parallel zu dessen Basis-Kollektor-Strecke angeordneten MOS-Feldeffekttransistor (T2) gebildet ist.

5. Schaltungsanordnung nach einem der Ansprüche 1 bis 4,
dadurch gekennzeichnet,
daß in Reihe zur Schaltvorrichtung ein Widerstand (R3) angeordnet ist.

6. Schaltungsanordnung nach Anspruch 5,
dadurch gekennzeichnet,
daß der Widerstand (R3) zwischen dem Bipolartransistor (T1) und dem Schaltelement (S) angeordnet ist.

7. Schaltungsanordnung nach einem der Ansprüche 1 bis 6,
dadurch gekennzeichnet,
daß in die Ansteuerleitung für den ersten Bipolartransistor (T1) eine Diode (D) eingefügt ist.

8. Schaltungsanordnung nach einem der Ansprüche 1 bis 7,
dadurch gekennzeichnet,
daß zwischen dem Gate-Anschluß des MOS-Feldeffekttransistors (T2) und einer Ader (a) der Anschlußleitung ein Widerstand (R5) angeordnet ist.

9. Schaltungsanordnung nach Anspruch 8,
dadurch gekennzeichnet,
daß der zwischen dem Gate-Anschluß des MOS-Feldeffekttransistors und einer Ader (a) der Anschlußleitung liegende Widerstand (R5) als Z-Diode (Z1) ausgebildet ist.

10. Schaltungsanordnung nach einem der Ansprüche 2 bis 9,
dadurch gekennzeichnet,
daß parallel zum Kondensator (C1) eine weitere Z-Diode (Z2) angeordnet ist.

11. Schaltungsanordnung nach einem der Ansprüche 1 bis 10,
dadurch gekennzeichnet,
daß die Ansteuerleitung für den ersten Bipolartransistor (T1) an einem Anzapfungspunkt eines aus zwei Widerständen (R1, R2) bestehenden im Ausgangskreis eines Optokopplers (OK) angeordneten Spannungsteilers liegt, dem eine Anzahl nichtlinearer Schaltungselemente in Serie geschaltet sind.

12. Schaltungsanordnung nach Anspruch 11,
dadurch gekennzeichnet,
daß die nichtlinearen Schaltungselemente Dioden sind.

13. Schaltungsanordnung nach einem der Ansprüche 1 bis 12,
dadurch gekennzeichnet,
daß der Bipolartransistor (T1) durch einen weiteren Bipolartransistor (T10) zu einer Darlington-Stufe (DT) ergänzt ist und daß zwischen den Emitter und der Basis des Bipolartransistors (T1) eine weitere Diode (D6) angeordnet ist.

## Claims

1. Circuit arrangement comprising a controller for producing dialling pulses for transmission devices, wherein a switching device is connected in parallel with the transmission device to the wires (a, b) of a subscriber line, which device comprises a series connection of a bipolar transistor (T1) and a switching element (S) comprising a MOS field-effect transistor (T2).

2. Circuit arrangement as claimed in Claim 1, wherein the bipolar transistor (T1) in the AC current mode is operated as a base circuit, and a capacitor (C1) is inserted between the base of the bipolar transistor (T1) and a wire (a).

3. Circuit arrangement as claimed in Claim 1 or 2, wherein the drain-source path of the switching element (S) comprising said MOS field-effect transistor (T2) is connected in series with the emitter-collector path of the bipolar transistor (T1).

4. Circuit arrangement as claimed in one of the Claims 1 or 2, wherein the switching element (S) connected in series with the emitter-collector path of the bipolar transistor (T1) is formed by the emitter-collector path of a further bipolar transistor (T3) and a MOS field-effect transistor (T2) connected in parallel with the base-collector path of this bipolar transistor (T3).

5. Circuit arrangement as claimed in one of the Claims 1 to 4, wherein a resistor (R3) is coupled in series with the switching device.

6. Circuit arrangement as claimed in Claim 5, wherein the resistor (R3) is coupled between the bipolar transistor (T1) and the switching element (5).

7. Circuit arrangement as claimed in one of the Claims 1 to 6, wherein a diode (D) is inserted in the control line of the first bipolar transistor (T1).

8. Circuit arrangement as claimed in one of the Claims 1 to 7, wherein between the gate connection of the MOS field-effect transistor (T2) and a wire (a) of the connecting line a resistor (R5) is inserted.

9. Circuit arrangement as claimed in Claim 8, wherein Z diode (Z1) substitutes for the resistor (R5) inserted between the gate connection of the MOS field-effect transistor and a wire (a) of the connecting line.

10. Circuit arrangement as claimed in one of the Claims 2 to 9, wherein an additional Z-diode (Z2) is connected in parallel with the capacitor (C1).

11. Circuit arrangement as claimed in one of the Claims 1 to 10, wherein the driving circuit for the first bipolar transistor (T1) is connected to a tapping point of a voltage divider included in the output circuit of an optocoupler (OK) and consisting of two resistors (R1, R2), with which voltage divider a number of non-linear switching elements are connected in series.

12. Circuit arrangement as claimed in Claim 11, wherein the non-linear circuit elements are diodes.

13. Circuit arrangement as claimed in one of the Claims 1 to 12, wherein the bipolar transistor (T1) together with a further bipolar transistor (T10) forms a Darlington circuit (DT) and wherein a further diode (D6) is coupled between the emitter and the base of the bipolar transistor (T1).

## Revendications

1. Montage de circuit pour équipements de transmission avec un dispositif de commande pour délivrer des impulsions de commutation, caractérisé en ce qu'un dispositif de commutation formé d'un transistor bipolaire (T1) en série avec un élément de commutation (S) à transistor à effet de champ MOS (T2) est agencé en parallèle avec l'équipement de transmission sur les fils (a, b) d'une ligne d'abonné.

2. Montage de circuit selon la revendication 1, caractérisé en ce que le transistor bipolaire (T1) est exploité en montage à base commune en courant alternatif, un condensateur (C1) se trouvant entre sa base et un fil (a).

3. Montage de circuit selon la revendication 1 ou 2, caractérisé en ce que la section drain-source de l'élément de commutation (S) constitué du transistor à effet à champ MOS (T2) est montée en série avec la section émetteur-collecteur du transistor bipolaire (T1).

4. Montage de circuit selon la revendication 1 ou 2, caractérisé en ce que l'élément de commutation (S), qui est en série avec la section émetteur-collecteur du transistor bipolaire (T1), est formé par la section émetteur-collecteur d'un autre transistor bipolaire (T3) et un transistor à effet de champ MOS (T2) agencé en parallèle avec cette section base-collecteur.

5. Montage de circuit selon l'une quelconque des revendications 1 à 4, caractérisé en ce qu'une résistance (R3) est agencée en série avec le dispositif de commutation.

6. Montate de circuit selon la revendication 5, caractérisé en ce que la résistance (R3) est agencée entre le transistor bipolaire (T1) et l'élément de commutation (S).

7. Montage de circuit selon l'une quelconque des revendications 1 à 6, caractérisé en ce qu'une diode (D) est insérée dans la ligne de commande pour le premier transistor bipolaire (T1).

8. Montage de circuit selon l'une quelconque des revendications 1 à 7, caractérisé en ce qu'une résistance (R5) est agencée entre la borne de grille du transistor à effet de champ MOS (T2) et un fil (a) de la ligne d'abonné.

9. Montage de circuit selon la revendication 8, caractérisé en ce que la résistance (R5) qui se trouve entre la borne de grille du transistor à effet de champ MOS et un fil (a) de la ligne d'abonné se présente sous la forme d'une diode Zener (Z1).

10. Montage de circuit selon l'une quelconque des revendications 2 à 9, caractérisé en ce qu'une autre diode Zener (Z2) est agencée en parallèle avec le condensateur (C1).

11. Montage de circuit selon l'une quelconque des revendications 1 à 10, caractérisé en ce que la ligne de commande pour le premier transistor bipolaire (T1) se trouve à un point de réglage d'un diviseur de tension constitué de deux résistances (R1, R2) et agencé dans le circuit de sortie d'un optocoupleur (OK), diviseur auquel un certain nombre de composants non linéaires sont connectés en série.

12. Montage de circuit selon la revendication 11, caractérisé en ce que les composants non linéaires sont des diodes.

13. Montage de circuit selon l'une quelconque des revendications 1 à 12, caractérisé en ce que le transistor bipolaire (T1) est complété par un autre transistor bipolaire (T10) pour former un étage de Darlington (DT) et une autre diode (D6) est agencée entre l'émetteur et la base du transistor bipolaire (T1).
